Europäisches Patentamt

European Patent Office

Office européen des brevets

(19)

(11) EP 0 748 023 A1

(12) DEMANDE DE BREVET EUROPEEN

(43) Date de publication:
11.12.1996 Bulletin 1996/50

(51) Int Cl.6: H02J 7/14, H02P 9/48

(21) Numéro de dépôt: 96401219.9

(22) Date de dépôt: 07.06.1996

(84) Etats contractants désignés:
DE ES GB IT

(30) Priorité: 08.06.1995 FR 9506782

(71) Demandeur: Société Anonyme dite: REGIE
NATIONALE DES USINES RENAULT
92109 Boulogne Billancourt (FR)

(72) Inventeurs:
• Duval, Hervé
  78400 Chatou (FR)

• Lamartinie, Elsa
  75011 Paris (FR)

(74) Mandataire: Fernandez, Francis Lionel et al
Régie Nationale des Usines Renault SA
Service 0267 - Bâtiment J2
860, Quai de Stalingrad
B.P. 103
92109 Boulogne Billancourt (FR)

(54) **Procédé d'optimisation du fonctionnement d'un alternateur, et dispositif de mise en oeuvre du procédé**

(57)    L'invention concerne un procédé d'optimisation du fonctionnement d'un alternateur placé en parallèle avec une batterie dans un réseau électrique automobile, et un dispositif de mise en oeuvre. Il consiste à mesurer la tension aux bornes de l'alternateur (3) ; à calculer une tension de référence de l'alternateur en fonction de sa vitesse de rotation et de la température, définie soit pour maintenir constante la tension de l'alternateur soit pour assurer le débit d'un courant maximum de l'alternateur ; à comparer la tension mesurée avec la tension de référence ; à commander une résistance variable (R) placée entre l'alternateur (3) et la batterie (2).

FIG_1

**Description**

L'invention concerne un procédé d'optimisation du point de fonctionnement d'un alternateur dans un réseau électrique automobile, permettant soit de maintenir constante la tension aux bornes de l'alternateur, soit d'assurer le débit du courant maximum de l'alternateur selon sa vitesse de rotation. Elle concerne également un dispositif de mise en oeuvre de ce procédé.

Actuellement, un réseau électrique automobile de type classique est alimenté électriquement par une source de tension continue, ou batterie, aux bornes de laquelle est branché en parallèle un ensemble alternateur-régulateur destiné à fournir un courant électrique alternatif aux différents éléments du réseau.

Lorsque le courant requis par l'ensemble des charges électriques du réseau est supérieur à celui que peut fournir l'alternateur, la batterie débite le courant complémentaire et la tension qu'elle délivre aux bornes du réseau chute. L'état de charge de la batterie décroît alors, provoquant des chutes de tension nuisibles au bon fonctionnement des différents organes électriques du réseau d'une part, et entraînant à long terme une diminution de la durée de vie de la batterie, d'autre part.

Pour pallier cet inconvénient, occasionné par l'alternateur qui ne peut fournir un courant suffisant sur le réseau électrique, dans certains cas de fonctionnement, l'invention propose l'adjonction d'une résistance située entre l'alternateur et la batterie, et dont la valeur variable est commandée selon deux stratégies, l'une permettant de maintenir constante la tension aux bornes de l'alternateur, l'autre permettant d'obtenir le courant maximum en fonction de la vitesse de rotation de l'alternateur.

Pour cela, un premier objet de l'invention est un procédé d'optimisation du fonctionnement d'un alternateur placé en parallèle avec une source de tension continue dans un réseau électrique automobile, caractérisé en ce qu'il comporte les étapes suivantes :

- mesure de la tension aux bornes de l'alternateur ;
- calcul d'une tension de référence de l'alternateur en fonction de sa vitesse de rotation N et de la température ambiante T, définie selon la stratégie de commande choisie ;
- comparaison de la tension mesurée avec la tension de référence ;
- commande d'une résistance variable placée entre l'alternateur et la batterie, en fonction du résultat de la comparaison précédente.

Un second objet de l'invention est un dispositif de mise en oeuvre du procédé, dans un réseau électrique automobile alimenté par une batterie aux bornes de laquelle est connecté un circuit alternateur-régulateur, caractérisé en ce qu'il comprend :

- une résistance variable connectée entre l'alternateur et la batterie, et

- un système de commande de ladite résistance variable. D'autres caractéristiques et avantages de l'invention apparaîtront à la lecture de la description suivante d'un exemple de réalisation, cette description étant faite en relation avec les dessins joints dans lesquels :
- la figure 1 est le schéma d'un réseau électrique automobile alimenté par une batterie et un alternateur, selon l'invention ;
- la figure 2 représente les courbes de variation de la somme des tensions aux bornes de la batterie et de la résistance, en fonction du courant qui traverse la résistance, d'après différentes valeurs de la résistance, selon l'invention ;
- la figure 3 est la courbe de variation de la tension aux bornes de l'alternateur en fonction du courant qu'il produit, à une température et une vitesse de rotation données ;
- la figure 4 montre les points de fonctionnement de l'alternateur optimisés selon l'invention ;
- la figure 5 est le schéma du dispositif d'optimisation d'un alternateur selon l'invention ;
- la figure 6 est la courbe de variation de la tension de référence de l'alternateur en fonction de la température et de la courbe de variation de la tension de référence du régulateur ;
- la figure 7 est la courbe de variation de la tension de référence de l'alternateur en fonction du courant qu'il débite ;
- les figures 8 et 9 sont les courbes de variation de la résistance variable du dispositif selon l'invention.

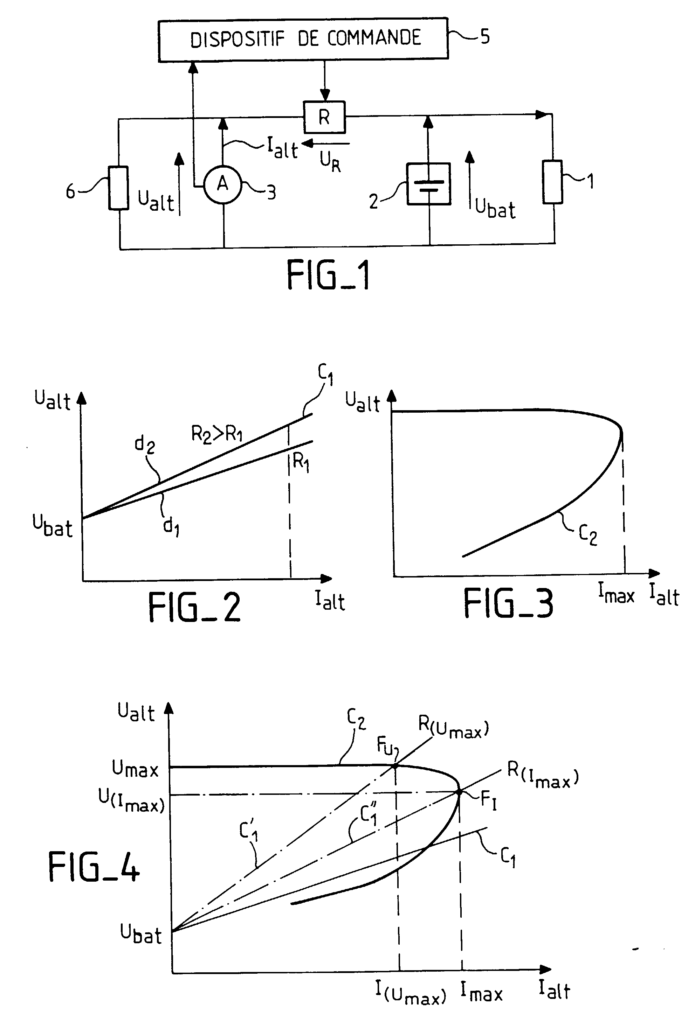

Etant donné un réseau électrique automobile alimenté, comme le montre la figure 1, par une source de tension continue, ou batterie 2, aux bornes de laquelle est connecté en parallèle un alternateur 3 associé à un régulateur, le dispositif de mise en oeuvre du procédé d'optimisation du point de fonctionnement de l'alternateur selon l'invention comporte une résistance variable R, connectée entre l'alternateur 3 et la batterie 2 et commandée par un système 5. Le réseau électrique est représenté par un ensemble 1 de charges électriques connecté à la batterie, appelé charges réseau, et par un ensemble 6 de charges connecté à l'alternateur et appelé charges alternateur.

En faisant l'hypothèse que la tension $U_{bat}$ aux bornes de la batterie 2 est constante, de l'ordre de 12 Volts, la tension $U_{alt}$ aux bornes de l'alternateur est égale à la somme de la tension $U_{bat}$ aux bornes de la batterie et de la tension $U_R$ aux bornes de la résistance R, qui est parcourue par le courant $I_{alt}$ produit par l'alternateur :

$$U_{alt} = U_{bat} + U_R = U_{bat} + R^*I_{alt}.$$

La figure 2 représente, vue du côté de la batterie, la courbe $C_1$ de variation de la tension aux bornes de l'alternateur $U_{alt}$ en fonction du courant $I_{alt}$ produit par

l'alternateur et circulant dans la résistance R, pour deux valeurs de celle-ci, $R_1$ et $R_2$, qui définissent les pentes de deux droites $d_1$ et $d_2$.

La figure 3 montre, vue de l'autre côté de l'ensemble constitué par l'alternateur et le régulateur, la courbe $C_2$ de variation de la tension $U_{alt}$ de l'alternateur en fonction du courant sortant $I_{alt}$, à une température T et une vitesse de rotation N données, sachant que le régulateur impose une tension maximale $U_{max}$ aux bornes de l'alternateur.

Le point de fonctionnement de l'alternateur, dans un réseau électrique comprenant le dispositif selon l'invention, est obtenu au point de superposition des deux courbes précédentes $C_1$ et $C_2$ de variation de la tension $U_{alt}$ de l'alternateur en fonction du courant sortant $I_{alt}$, à une température T et une vitesse de rotation N données, comme cela apparaît sur la figure 4. L'adjonction d'une résistance variable R entre la batterie et l'alternateur lorsque ce dernier fonctionne en plein champ permet de faire évoluer le point de fonctionnement de l'alternateur, et en particulier d'augmenter la tension et le courant qu'il débite.

Le principe du procédé d'optimisation du point de fonctionnement d'un alternateur selon l'invention est le suivant : lorsque la tension aux bornes de l'alternateur devient inférieure à une tension de référence préalablement déterminée en fonction de la température ambiante de fonctionnement et de la vitesse de rotation de l'alternateur, on commande la résistance variable selon la stratégie de fonctionnement choisie pour l'alternateur. Pour cela, le procédé d'optimisation du point de fonctionnement d'un alternateur placé en parallèle avec une source de tension continue dans un réseau électrique automobile, comporte les étapes suivantes :

- mesure de la tension $U_{alt}$ aux bornes de l'alternateur ;
- calcul d'une tension de référence $U_{réf}$ de l'alternateur en fonction de sa vitesse de rotation N et de la température ambiante T, définie selon la stratégie de commande choisie ;
- comparaison de la tension mesurée $U_{alt}$ avec la tension de référence $U_{réf}$ ;
- commande d'une résistance variable R placée entre l'alternateur et la batterie.

Deux stratégies d'optimisation du point de fonctionnement d'un alternateur, en tension ou en courant, sont possibles en fonction de la valeur de la tension de référence choisie.

L'optimisation du point de fonctionnement d'un alternateur en tension est réalisable si, pour une température ambiante T de fonctionnement donnée, la tension de référence $U_{réf}$ est égale à la tension maximale $U_{max}$ aux bornes de l'alternateur, alors la commande de la résistance variable R permet de maintenir constante la tension de l'alternateur $U_{alt}$.

Sur la figure 4 correspondant à une température ambiante T donnée, le point de fonctionnement optimal $F_U$ est obtenu à l'intersection de la courbe $C_2$ avec la courbe $C'_1$ correspondant à une résistance $R(U_{max})$ permettant le débit d'un courant $I(U_{max})$ par l'alternateur.

L'optimisation du point de fonctionnement d'un alternateur en courant est réalisable si, pour une température ambiante T de fonctionnement et une vitesse de rotation N données, la tension de référence $U_{réf}$ est égale à la tension $U(I_{max})$ pour laquelle le courant débité par l'alternateur est maximal $I_{max}$, alors la commande de la résistance variable R autorise la fourniture de ce courant maximum par l'alternateur.

Sur la figure 4, le point de fonctionnement optimal $F_I$ est obtenu à l'intersection de la courbe $C_2$ avec la courbe $C''_1$ correspondant à une résistance $R(I_{max})$ permettant le débit du courant maximum $I_{max}$ par l'alternateur, sous une tension correspondante $U(I_{max})$.

Comme cela a été décrit pour la figure 1, le dispositif de mise en oeuvre du procédé d'optimisation du point de fonctionnement d'un alternateur comprend une résistance variable R connectée entre l'alternateur 3 et la batterie 2, et un système de commande 5 de ladite résistance variable R.

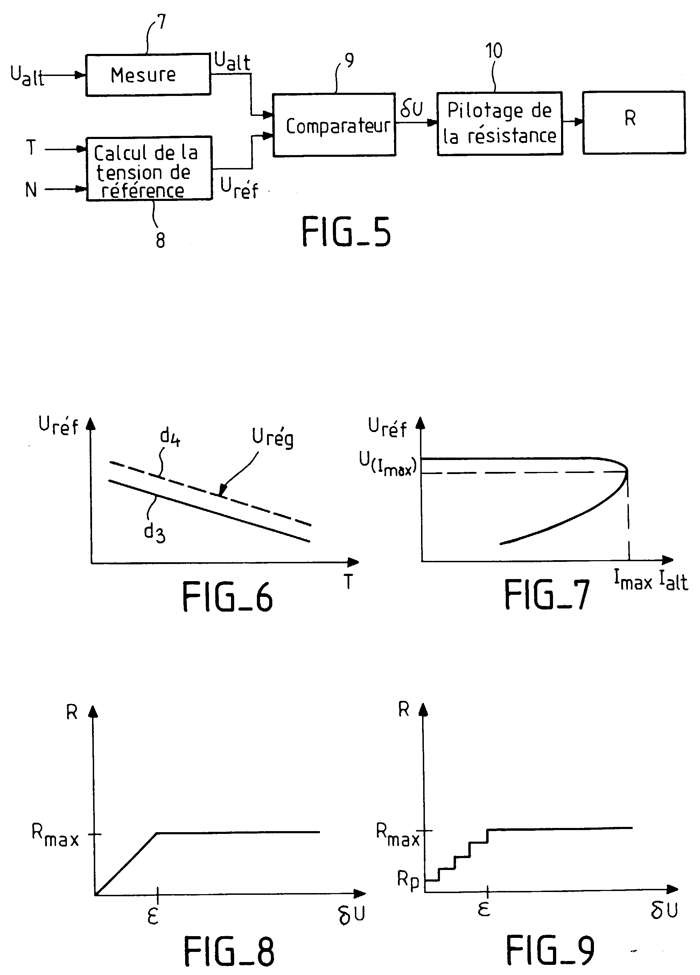

Le système de commande 5 de la résistance variable, représenté schématiquement par la figure 5, comprend :

- des moyens 7 de mesure de la tension $U_{alt}$ aux bornes de l'alternateur ;
- des moyens 8 de calcul d'une tension de référence $U_{réf}$ de l'alternateur en fonction de sa vitesse de rotation N et de la température ambiante T, définie selon la stratégie de commande choisie ;
- des moyens 9 de comparaison de la tension mesurée $U_{alt}$ avec la tension de référence $U_{réf}$ délivrant la différence $\delta U$ entre ces deux tensions;
- des moyens 10 de pilotage de la résistance variable R placée entre l'alternateur et la batterie en fonction de la différence $\delta U$ obtenue entre la tension mesurée $U_{alt}$ de l'alternateur et la tension de référence $U_{réf}$.

Dans un exemple particulier de réalisation, les moyens 7 de mesure de la tension aux bornes de l'alternateur sont réalisés par un filtre passe-bas, dont les caractéristiques sont fonction de la sensibilité choisie.

Les moyens de calcul d'une tension de référence de l'alternateur prennent en compte la stratégie de pilotage de la résistance choisie. Ainsi, dans le cas d'une optimisation en tension du point de fonctionnement de l'alternateur, le calcul de la tension de référence consiste à faire varier sa valeur $U_{réf}$ linéairement avec la température, la pente de la droite $d_3$ ainsi définie étant la même que celle de la droite $d_4$ représentant la variation de la tension $U_{rég}$ d'un régulateur, associé à l'alternateur, en fonction de la température, comme cela apparaît sur la figure 6.

De plus, pour ne pas déclencher le fonctionnement du régulateur, on calcule la tension de référence légèrement inférieure à la tension du régulateur, l'écart entre ces deux tensions étant faible par rapport à la tension de référence.

Dans le cas d'une optimisation en courant du point de fonctionnement de l'alternateur, les moyens de calcul déterminent les valeurs, référencées $U(I_{max})$, de la tension de référence $U_{réf}$ de l'alternateur pour laquelle ce dernier débite un courant maximal $I_{max}$, à une température T et une vitesse de rotation N données (figure 7).

Après avoir mesuré la tension aux bornes de l'alternateur, par les moyens de mesure 7 et avoir calculé la tension de référence pour cet alternateur, en fonction du choix du point de fonctionnement, ces deux valeurs de tension sont comparées dans un comparateur 9 qui délivre une différence $\delta U$ entre ces deux valeurs. En fonction de cette différence $\delta U$, la résistance R entre la batterie et l'alternateur est commandée par rapport à l'écart $\in$ qui existe entre la tension $U_{alt}$ et la tension de référence $U_{réf}$ au-delà duquel la résistance variable est commandée en fonction de la sensibilité souhaitée. Ainsi, quand la différence $\delta U$ est inférieure à cet écart $\in$, la résistance R varie d'une valeur nulle à une valeur maximum $R_{max}$, continûment ou par palier, et quand la différence $\delta U$ est supérieure à $\in$, la résistance est commandée à la valeur maximale $R_{max}$.

La figure 8 est une courbe de variation continue de la résistance variable R en fonction de la différence $\delta U$ entre la tension mesurée et la tension de référence de l'alternateur. Pour une différence $\delta U$ comprise entre 0 et l'écart $\in$ précédemment défini, la résistance varie continûment entre 0 et $R_{max}$ selon une droite définie par l'équation suivante :

$$R = R_{max}*\delta U/\in .$$

Puis, pour des valeurs de $\delta U$ supérieures à $\in$, la résistance reste constante, égale à la valeur $R_{max}$.

La figure 9 est une courbe de variation discontinue, par paliers, de la résistance variable R en fonction de la différence $\delta U$. Pour des valeurs de $\delta U$ comprises entre 0 et l'écart $\in$, la résistance varie selon un nombre k de paliers dont la valeur d'un pas est $R_p$, avec $k = R_{max}/R_p$.

La commande de la résistance R réalise sa variation de la façon suivante :

| si o < $\delta U \leq \in/k-1$ | R = $R_p$ |
|---|---|
| si $\in/k-1 < \delta U \leq 2*\in/k-1$ | R = $2*R_p$ |
| si $(i-1) < \delta U \leq i*\in/k-1$ | R = $i*R_p$ |
| si $\in < \delta U$ | R = $R_{max}$ |

Ainsi, l'invention permet d'améliorer la tenue en tension aux bornes de l'alternateur et l'optimisation de la régulation du courant alternateur par enclenchement d'une résistance variable entre la batterie et l'alternateur. Grâce à l'invention, et selon la stratégie de commande choisie, il est alors possible, dans un premier cas, de maintenir constante la tension aux bornes de l'alternateur, et dans un second cas, d'assurer le débit maximum de l'alternateur selon sa vitesse de rotation. dans le premier cas, les charges connectées directement aux bornes de l'alternateur seront alimentées par une tension quasiment constante, ce qui est intéressant pour les organes sensibles aux fluctuations de tension. Dans le second cas, l'alternateur débite plus de courant, réduisant le débit de la batterie, dont l'état de charge est ainsi préservé et le cyclage restreint. La durée de vie de la batterie est alors augmentée.

## Revendications

1. Procédé d'optimisation du point de fonctionnement d'un alternateur (3) placé en parallèle avec une source de tension continue (2) dans un réseau électrique automobile, caractérisé en ce qu'il comporte les étapes suivantes :

   - mesure de la tension ($U_{alt}$) aux bornes de l'alternateur ;
   - calcul d'une tension de référence ($U_{réf}$) de l'alternateur en fonction de sa vitesse de rotation (N) et de la température ambiante (T), définie selon la stratégie de commande choisie ;
   - comparaison de la tension mesurée ($U_{alt}$) avec la tension de référence ($U_{réf}$) ;
   - commande d'une résistance variable (R) placée entre l'alternateur et la batterie, effectuée en fonction de la différence ($\delta U$) obtenue entre la tension mesurée ($U_{alt}$) de l'alternateur et la tension de référence ($U_{réf}$) à l'étape de comparaison précédente, comparée à l'écart ($\in$) entre la tension mesurée ($U_{alt}$) et la tension de référence ($U_{réf}$) au-delà duquel la résistance variable est commandée en fonction de la sensibilité souhaitée :
   - quand la différence ($\delta U$) est inférieure à l'écart ($\in$), la résistance variable (R) varie d'une valeur nulle à une valeur maximale ($R_{max}$), continûment ou par palier,
   - quand la différence ($\delta U$) est supérieure à l'écart ($\in$), la résistance variable (R) est égale à la valeur maximale ($R_{max}$)..

2. Procédé d'optimisation selon la revendication 1, du point de fonctionnement en tension d'un alternateur, caractérisé en ce que l'étape de calcul de la tension de référence de l'alternateur (3) consiste à faire varier la valeur de la tension de référence ($U_{réf}$) linéairement avec la température (T), la pente de la droite ($d_3$) ainsi définie étant la même que celle de la variation ($d_4$) de la tension ($U_{rég}$) d'un régulateur associé à l'alternateur en fonction de la température (T), les valeurs de la tension de référence ($U_{réf}$)

étant légèrement inférieures aux valeurs de la tension du régulateur ($U_{rég}$) par rapport à la tension de référence.

3.  Procédé d'optimisation selon la revendication 1 du point de fonctionnement en courant d'un alternateur, caractérisé en ce que l'étape de calcul de la tension de référence de l'alternateur consiste à déterminer les valeurs de la tension de référence ($U_{réf}$) sous laquelle l'alternateur débite un courant maximal ($I_{max}$) en fonction des différentes valeurs de température (T) et de vitesse de rotation (N) de l'alternateur.

4.  Dispositif de mise en oeuvre du procédé d'optimisation du point de fonctionnement d'un alternateur (3) selon l'une des revendications précédentes, placé dans un réseau électrique automobile alimenté par une source de tension continue (2) de type batterie connectée audit alternateur qui est associé à un régulateur, caractérisé en ce qu'il comprend une résistance variable (R) connectée entre l'alternateur (3) et la batterie (2), et un système (5) de commande de ladite résistance variable (R), comprenant :

    -   des moyens (7) de mesure de la tension ($U_{alt}$) aux bornes de l'alternateur (3);
    -   des moyens (8) de calcul d'une tension de référence ($U_{réf}$) de l'alternateur en fonction de sa vitesse de rotation (N) et de la température ambiante (T), définie selon la stratégie de commande choisie ;
    -   des moyens (9) de comparaison de la tension mesurée ($U_{alt}$) avec la tension de référence ($U_{réf}$) ;
    -   des moyens (10) de commande de la résistance variable (R) placée entre l'alternateur (3) et la batterie (2) en fonction de la différence ($\delta U$) obtenue entre la tension mesurée ($U_{alt}$) de l'alternateur et la tension de référence ($U_{réf}$).

5.  Dispositif selon la revendication 6, caractérisé en ce que les moyens de mesure de la tension ($U_{alt}$) aux bornes de l'alternateur sont constitués par un filtre passe-bas.

DISPOSITIF DE COMMANDE — 5

R

$I_{alt}$  $U_R$

6  $U_{alt}$  (A) — 3  2  $U_{bat}$  1

## FIG_1

$U_{alt}$  $C_1$

$d_2$  $R_2 > R_1$

$R_1$

$U_{bat}$  $d_1$

$I_{alt}$

## FIG_2

$U_{alt}$

$C_2$

$I_{max}$  $I_{alt}$

## FIG_3

$U_{alt}$

$C_2$  $F_{U}$  $R_{(U_{max})}$

$U_{max}$

$U_{(I_{max})}$  $R_{(I_{max})}$

$C_1''$  $F_I$

$C_1'$

## FIG_4

$C_1$

$U_{bat}$

$I_{(U_{max})}$  $I_{max}$  $I_{alt}$

6

FIG_5

FIG_6

FIG_7

FIG_8

FIG_9

Office européen
des brevets

**RAPPORT DE RECHERCHE EUROPEENNE**

Numero de la demande

EP 96 40 1219

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 593 299 (FORD MOTOR CO) 20 Avril 1994 <br> * colonne 4, ligne 25 - colonne 5, ligne 50; revendication 1; figures 1-4 * <br> --- | 1,3,4 | H02J7/14 <br> H02P9/48 |
| A | DE-A-41 10 495 (TEVES GMBH ALFRED) 1 Octobre 1992 <br> * abrégé; figure * <br> --- | 1,3,4 | |
| A | DE-A-22 40 486 (BOSCH GMBH ROBERT) 21 Février 1974 <br> * revendication 1; figure 4 * <br> --- | 1,2 | |
| A | DE-A-29 50 587 (VARTA BATTERIE) 23 Juillet 1981 <br> * le document en entier * <br> ----- | 1,4 | |

| | DOMAINES TECHNIQUES RECHERCHES (Int.Cl.6) |
|---|---|
| | H02J <br> H02P |

Le présent rapport a été établi pour toutes les revendications

| Lieu de la recherche | Date d'achèvement de la recherche | Examinateur |
|---|---|---|
| LA HAYE | 30 Août 1996 | Bourbon, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)